# EUROPÄISCHE PATENTSCHRIFT

(11) **EP 2 793 327 B1**
(45) Veröffentlichungstag und Bekanntmachung des Hinweises auf die Patenterteilung: **14.09.2016**
(21) Anmeldenummer: 13164005.4
(22) Anmeldetag: 16.04.2013
(51) Int. Cl.: H01R 43/28

(54) **Formen von Leitungsenden**
Forming pipe ends
Formes d'extrémités de conduites

(43) Veröffentlichungstag der Anmeldung: 22.10.2014
(73) Patentinhaber: Schleuniger Holding AG, 3608 Thun (CH)
(72) Erfinder: Knuchel, Walter, 8624 Grüt (CH); Messina, Carmelo, 6340 Baar (CH); Camenzind, Cyrill, 6410 Goldau (CH)
(74) Vertreter: Patentbüro Paul Rosenich AG

(56) Entgegenhaltungen:
- EP-A1- 2 372 848
- WO-A1-00/33430
- DE-U1- 20 301 985

## Beschreibung

Die Erfindung betrifft eine Ausrichtvorrichtung für einzelne Leitungsenden eines Kabels gemäss dem Oberbegriff des unabhängigen Anspruches 1, sowie ein Verfahren zum Formen von Leitungsenden gemäss dem Oberbegriff des unabhängigen Anspruches 9.

Durch die Verarbeitung der Leitungsenden von aus mehreren Litzen bestehenden Kabeln ist eine genaue Ausrichtung der Leitungen für die weitere Verarbeitung problematisch, da in der einzelnen Litze am Leitungsende Spannungen entstehen. Diese Spannungen bauen sich auf durch die vorgelagerte Verarbeitung (Abisolieren, Formen, Crimpen, etc.).

Ein einfaches. manuelles Werkzeug, das eine Ausrichtung von mehreren Kabelenden erlaubt, ist in der WO 00/33430 A1 beschrieben. Die zuvor freigelegten Kabelenden müssen dabei manuell in durch das Werkzeug hindurchgehende Löcher eingeschoben werden. Es ist keinerlel Möglichkeit der Automatisierung oder kontrollierten Relativbewegung von Kabelende und Werkzeug vorgesehen.

In der DE102U04004976A1 ist eine Vorrichtung zur Vereinzelung von mehreren in einem Kabelmantel verdrillt angeordneter Litzen offenbart. In einer ersten schwenkbaren Klemmvorrichtung ist das freie Ende des Kabelmantels eingespannt, und in eine zweite Klemmvorrichtung sind die Litzen eingespannt, wobei die Klemmvorrichtung die Litzen umfasst. Nach Verspannen der beiden Klemmvorrichtungen werden diese zur Aufspreizung der Litzenstränge gegeneinander verschwenkt und ein koaxial zum eingespannten Kabel verschieb- und drehbar gelagertes Vereinzelungselement fährt zwischen die aufgespreizten Litzenstränge ein. Ein Überstreifelement fährt anschliessend zur Anlage sowie zur Ausrichtung der einzelnen Litzen über das Vereinzelungselement, bevor nach Freigabe der ausgerichteten Litzen von dem Vereinzelungselement ein unter dem Vereinzelungselement angeordnetes kammartiges Element die Litzen in seinen Schlitzen aufnimmt Wenngleich hier zusammenliegende oder verdrillte Litzen durch Rotations- und Linearbewegungen vereinzelt werden, erfolgt keine genaue Ausrichtung bzw. keine formende Anordnung in eine definierte Lage von vorbearbeiteten Leitungen.

Dies gilt in ähnlicher Weise für alle herkömmlichen Vorrichtungen mit einer Klemmvorrichtung für das Kabel und einem Aufnahmeelement mit Ausnehmungen für die freigelegten Litzen. Auch gilt dies für Verfahren zum Formen von Leitungsenden, bei welchen ein Aufspreizen und Ausrichten der Litzen eines Kabels vorgenommen wird.

Lediglich eine Litze oder ein Kabel wird mit einer Vorrichtung bearbeitet, die in der EP 2372848 A1 offenbart ist. Ein einadriges Kabel wird in einem Klemmelement eingespannt und im Zuge des Aufschiebens einer Kabeltülle werden dieses Klemmelement und der Körper zum Aufschieben der Kabeltülle relativ zueinander und in Richtung der Kabelachse mittels zumindest eines Antriebs bewegt werden.

Die Aufgabe der vorliegenden Erfindung ist daher eine Vorrichtung und ein Verfahren derart auszubilden, dass der Abbau von Spannungen in den Leitungsenden von vorbearbeiteten Kabelenden und die möglichst exakte Ausrichtung dieser Leitungsenden ermöglicht wird.

Zur Lösung dieser Aufgabe sind die Merkmale des unabhängigen Anspruchs 1 vorgesehen.

Ausgangspunkt ist eine Ausrichtvorrichtung für zumindest zwei einzelne Leitungsenden eines Kabels, mit einer Klemmvorrichtung für das Kabel und einem Aufnahmeelement mit Ausnehmungen für die zumindest zwei freigelegten Leitungsenden, wobei das Aufnahmeelement und die Klemmvorrichtung relativ zueinander und koaxial zur Längsachse des eingespannten Kabels verschiebbar gelagert sind, wie beispielsweise in der DE102004004978A1 offenbart ist.

Erfindungsgemäss ist diese Ausrichtvorrichtung dadurch gekennzeichnet, dass die Ausnehmungen des Aufnahmeelementes trichterförmige Führungen für die Leitungsenden aufweisen, an welche Führungen sich jeweils ein längliches Sackloch anschliesst, und wobei jedenfalls das Aufnahmeelement gegenüber der Klemmvorrichtung für das Kabel koaxial zur Längsachse des eingespannten Kabels drehbar gelagert ist. Der Begriff "Längsachse des eingespannten Kabels" bedeutet hier die Richtung der Achse des Kabels im Bereich der Leitungsenden. Üblicherweise wird diese Längsachse auch mit der Längsachse des Kabels an der Stelle seiner Einspannung in die Klemmvorrichtung übereinstimmen.

Mit der beschriebenen Vorrichtung können die Leitungsenden spannungsfrei in einer Weise bewegt werden, dass dadurch jegliche Spannungen darin abgebaut werden können, die durch jegliche Art der Vorbearbeitung darin auf gebaut wurden. Durch die zu Ende des mit der erfindungsgemässen Vorrichtung durchgeführten Manipulation bei den Leitungsenden vorliegende Spannungsfreiheit können diese Leitungsenden für die Vereinfachung nachfolgender Verarbeitungsschritte wie Montage in einem Steckergehäuse od. dgl. genauer ausgerichtet werden als es bisher möglich war.

Vorteilhafte Weiterbildungen der Erfindung In Bezug auf die Vorrichtung sind in den abhängigen Ansprüchen definiert und auch der folgenden Beschreibung sowie den Zeichnungsfiguren zu entnehmen.

Bevorzugt ist das Aufnahmeelement in einer Ebene senkrecht auf die Richtung des eingespannten Kabels schwenkbar gelagert. Damit kann bei einfacher konstruktiver Ausführung der Vorrichtung ein optimales Ergebnis erzielt werden.

Eine vorteilhafte Ausführungsform der Erfindung ist dadurch gekennzeichnet, dass das Aufnahmeelement relativ zu einer im Wesentlichen ortsfesten Klemmvorrichtung verschiebbar gelagert ist, vorzugsweise koaxial zur Längsachse des eingespannten Kabels. Die sichere Fixierung des Kabels wird bei feststehender Klemmvorrichtung am wenigsten beeinträchtigt.

Vorzugsweise sind die Sacklöcher in einer vordefinierten geometrischen Anordnung, vorzugsweise gleichverteilt entlang eines Kreises um den Schnittpunkt der Längsachse des eingespannten Kabels mit der ortsfesten Ebene der Bewegung des Aufnahmeelementes, vorgesehen. Die Beabstandung der länglichen Sacklöcher wird idealerweise auf den folgenden Verarbeitungsschritt angepasst. Beispielsweise entsprechen die Abstände der Sacklöcher zu einer den Abständen im zu montierenden Gehäuse.

Für viele Nachbearbeitungen ist es vorteilhaft, wenn die Leitungsenden In Bezug aufeinander in einer bestimmten Art und Weise ausgerichtet sind, typischerweise genau parallel zueinander ausgerichtet und spannungsfrei sind. Daher sieht eine vorteilhafte Ausführungsform der Erfindung vor, dass die Sacklöcher in einer vorgegebenen Orientierung zueinander angeordnet sind, vorzugsweise parallel zueinander liegen.

Um das ungehinderte Einschieben der Leitungsenden und die spannungsfreie Ausrichtung zu gewährleisten, entspricht die Länge der Sacklöcher zumindest der freien Länge der Leitungsenden und ist vorzugsweise in jeder Tiefe der Sacklöcher deren kleinster Durchmesser grösser als der grösste Durchmesser der Leitungsenden oder der Durchmesser des angebrachten Bauteils an einem beliebigen Längsabschnitt der Leitungsenden. Dabei umfasst hier der Terminus Leitungsenden auch alle zusätzlichen, auf das Ende oder im Endbereich der Litze aufgebrachten oder daran befestigten Bauteile.

Wenn gemäss einer vorzugsweisen Ausführungsform der Erfindung zumindest einige der Sacklöcher verschliessbar sind und/oder der Querschnitt zumindest einiger der Sacklöcher zumindest über einen Teil ihrer Tiefe einstellbar ist, kann die Vorrichtung einfach und rasch für verschiedene Typen von Kabeln und Leitungsenden adaptiert werden.

Bevorzugt ist vorgesehen, dass das die Klemmvorrichtung und das Aufnahmeelement mit einer Steuerung verbunden sind, in welcher ein Ablauf implementiert ist, gemäss welchem nachfolgend an das Annähern der Klemmvorrichtung an das Aufnahmeelement mit Einschieben der Leitungsenden in die Sacklöcher das Aufnahmeelement derart in Drehung versetzt wird, dass es aus der Ausgangsstellung zumindest je einmal um je einen vordefinierten Winkel in jede Umfangsrichtung verdreht wird.

Verfahren zum Formen von Leitungsenden eines Kabels mit zumindest zwei Leitungsenden, umfassend das Aufspreizen und Ausrichten der Leitungsenden des Kabels.

Ein solches Verfahren ist zur Lösung der gestellten Aufgabe erfindungsgemäss gekennzeichnet durch die Merkmale des unabhängigen Anspruchs 9.

Im Rahmen dieses Verfahrens sind Schritte vorgesehen, die das Einschieben und spannungsfreie Positionieren je eines Leitungsendes in jeweils eines einer Anzahl von zumindest zwei vorzugsweise parallel verlaufenden Sacklöchern und durch das anschliessende zumindest einmalige gemeinsame Bewegen der Leitungsenden um eine gemeinsame erste Achse durch Bewegen der Sacklöcher um eine gemeinsame zweite Achse der Sacklöcher umfassen. Diese
beiden Achsen fallen in einer bevorzugten Ausführungsform der Erfindung zusammen. Eine weitere Ausführungsform sieht alternativ oder ergänzend vor, dass zumindest eine der genannten Achsen auch mit der Längsachse des eingespannten Kabels zusammenfällt. Vorzugsweise fallen also die erste, gemeinsame Achse der Leitungsenden, die zweite, gemeinsame Achse der Sacklöcher und die Längsachse des Kabels in einer Achse zusammen.

Vorteilhafte Weiterbildungen der Erfindung sind in den abhängigen Verfahrens-Ansprüchen definiert und auch der folgenden Beschreibung sowie den Zeichnungsfiguren zu entnehmen.

Für den Verfahrensablauf ist in vorteilhafter Weise für eine einfache und dennoch effektive Manipulation der Leitungsenden vorgesehen, dass die Anordnung der Leitungsenden um die erste Achse zumindest einmal gedreht wird, welche erste Achse durch den zentralen Bereich zwischen den Leitungsenden verläuft.

Als besonders vorteilhaft insbesondere in Bezug auf die Erzielung der Spannungsfreiheit hat es sich gezeigt, die Anordnung der Leitungsenden zumindest einmal aus der Ausgangsstellung um je einen vordefinierten Winkel in jede der beiden Umfangsrichtungen zu verdrehen.

Vorzugsweise ist vorgesehen, die Anzahl und/oder die Dimensionen der Sacklöcher derart anzupassen, dass die Anzahl der Sacklöcher der Anzahl der Leitungsenden und die Länge der Sacklöcher zumindest der freien Länge der Leitungsenden entspricht und vorzugsweise in jeder Tiefe der Sacklöcher deren kleinster Durchmesser grösser ist als der grösste Durchmesser der Leitungsenden an einem beliebigen Längsabschnitt der Leitungsenden.

Dabei ist es besonders vorteilhaft, weil ohne aufwendige Einstellarbeiten an der Vorrichtung möglich, wenn die Anpassung der Anzahl und/oder der Dimensionen der Sacklöcher durch Auswahl und Rüsten der Ausrichtvorrichtung mit einem die gewünschte Anzahl und die gewünschten Dimensionen der Sacklöcher aufweisenden Aufnahmeelement umfasst. Rüsten bezeichnet in diesem Zusammenhang alle Tätigkeiten, die Vorrichtung für die Ausführung des erfindungsgemässen Verfahrens einzurichten, sie beispielsweise mit dem notwendigen Aufnahmeelement und gegebenenfalls mit einer angepassten Klemmvorrichtung zu bestücken.

Alternativ dazu kann auch vorgesehen sein, die Anpassung der Anzahl und/oder der Dimensionen der Sacklöcher durch Öffnen oder Verschliessen bzw. durch Anpassung des Querschnitts der Sacklöcher im Aufnahmeelement zu realisieren.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine beispielhafte Ausführungsform einer erfindungsgemässen Ausrichtvorrichtung in einer Ansicht von vorne und oben,
- Fig. 2: einen vergrösserten Ausschnitt der Fig.1, in welchem das vordere Ende des Aufnahmeelementes deutlicher erkennbar ist,
- Fig. 3: einen Längsschnitt durch ein Aufnahmeelement mit davon beabstandeten Leitungsenden am Ende eines Kabels,
- Fig. 4: einen Längsschnitt entsprechend Fig. 3, nun aber mit in das Aufnahmeelement zur Ausrichtung und Spannungslösung eingeschobenen Leitungsenden, und
- Fig. 5: eine Vorderansicht des Aufnahmeelementes der Fig. 3 und 4 mit Angabe der Richtung und des Winkels von dessen Verdrehbarkeit.

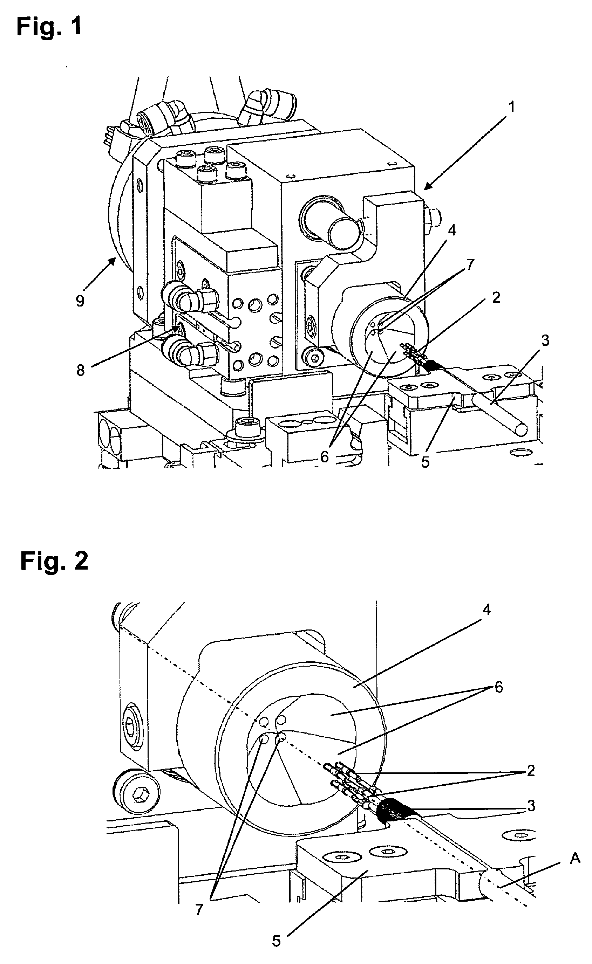

Fig. 1 zeigt eine Verarbeitungsstation für Kabel, mit einer erfindungsgemässen Ausrichtvorrichtung 1, mit welcher im vorliegenden Fall zwei bis vier Leitungsenden 2 eines Kabels 3 spannungsfrei und parallel für die weitere Verarbeitung des Kabels 3 bzw. von dessen Leitungsenden 2 ausgerichtet werden können. Je nach Ausgestaltung des Aufnahmeelementes 4 einer erfindungsgemässen Ausrichtvorrichtung können aber auch Kabel 3 mit noch mehr Litzen bearbeitet werden.

Das Kabel 3 selbst wird in einem an die Leitungsenden 2 anschliessenden und noch mit seiner Umhüllung, Isolierung, Ummantelung, etc. versehenen Bereich in einer Klemmvorrichtung 5 um seine Längsachse A drehfest und in Richtung dieser Längsachse A translatorisch fixiert eingespannt.

Das den Leitungsenden 2 gegenüberliegende Aufnahmeelement 4 weist eine Führung 6 oder im vorliegenden Fall mehrere Führungen 6 auf, die sich gegen die Leitungsenden 2 hin öffnen. An den Leitungsenden 2 gegenüberliegenden Enden der oder jeder Führung 6 schliessen sich Sackbohrungen 7 an, deren Anzahl der Anzahl der auszurichtenden Leitungsenden 2 entspricht. Diese länglichen Sackbohrungen 7 sind parallel zueinander ausgerichtet.

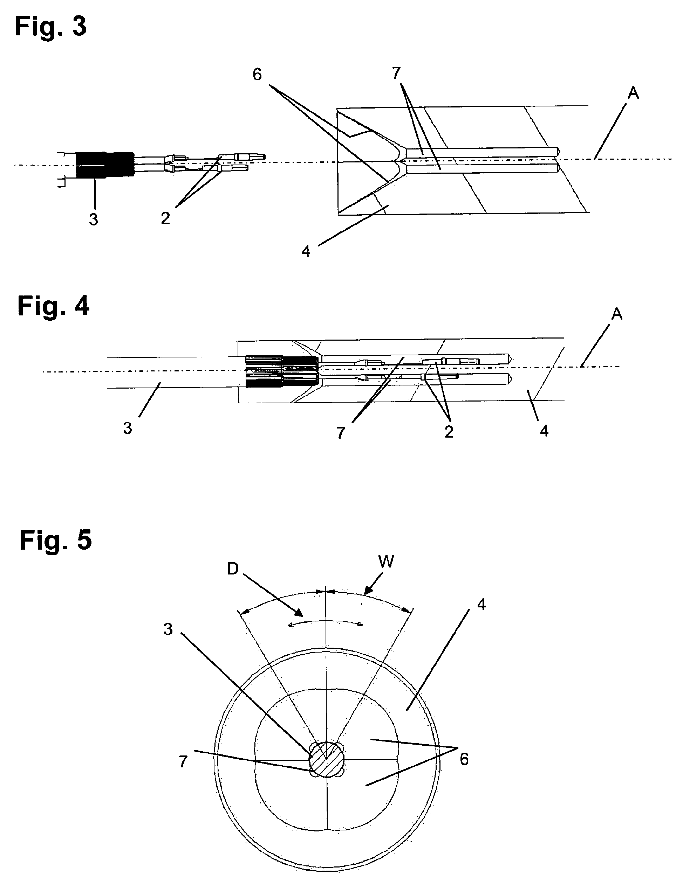

Die Sacklöcher 7 liegen in einer vordefinierten geometrischen Anordnung vor, die der gewünschten Anordnung der Leitungsenden 2 für die weitere Verarbeitung des Kabels 3 entspricht. Vorzugsweise sind (siehe dazu Fig. 5) die Sacklöcher 7 gleichverteilt entlang des Umfangs eines Kreises um den Schnittpunkt der Längsachse A (siehe dazu die Erläuterung in der Beschreibungseinleitung) des eingespannten Kabels 3 mit der ortsfesten Ebene vorgesehen, welche Ebene typischerweise durch die Öffnungen der Sacklöcher 7 definiert ist.

Die Länge der Sacklöcher 7 entspricht zumindest der freien Länge der Leitungsenden 2, damit diese zur Gänze in die Sacklöcher 7 eingeschoben werden können. Weiters ist, um die spannungsfreie Anordnung der Leitungsenden 2 im Aufnahmeelement 4 zu gewährleisten, in jeder Tiefe der Sacklöcher 7 deren kleinster Durchmesser grösser ist als der grösste Durchmesser der Leitungsenden 2 an einem beliebigen Längsabschnitt dieser Leitungsenden 2. Dabei müssen selbstverständlich auch alle gegebenenfalls an den Leitungsenden 2 befestigten oder sonst damit verbundenen Bauteile oder Elemente mit berücksichtigt werden. Es erfolgt keine Fixierung der Leitungsenden 2 in den Sacklöchern 7. Falls die Gefahr der Beschädigung der verbundenen Bauteile besteht oder diese bezüglich ihrer Form sehr komplex sind, kann eine Fixierung der Leitungsenden 2 in den Sacklöchern 7 notwendig sein, um zumindest die gewünschte Ausrichtung der Leitungsenden 2 zu bewerkstelligen.

Die Sacklöcher 7 können allenfalls als Stufenbohrung ausgeführt sein, aber in jedem Fall ist der Durchmesser in jedem Bereich des Sackloches 7 grösser als der Durchmesser des Leitungsendes 2 oder jedes damit verbundene Bauteils, beispielsweise eines aufgepressten Kontaktes.

Um die Leitungsenden 2 in die Sacklöcher 7 einschieben zu können, sind das Aufnahmeelement 4 und die Klemmvorrichtung 5 relativ zueinander koaxial zur Längsachse A des eingespannten Kabels 3 verschiebbar gelagert. Üblicherweise ist dabei das Aufnahmeelement 4 vorzugsweise mittels eines elektrischen, hydraulischen, pneumatischen oder anderen Antriebsmechanismus 8 in Richtung auf die Klemmvorrichtung 5 hin und von dieser weg verschiebbar. Gegebenenfalls kann auch allein die Klemmvorrichtung 5 oder können beide Bauteile bewegbar gelagert sein.

Jedenfalls ist das Aufnahmeelement 4 in einer Ebene senkrecht auf die Richtung des eingespannten Kabels 3 bewegbar, wobei diese Bewegung vorzugsweise eine Drehung koaxial zur Richtung bzw. der Längsachse A des eingespannten Kabels 3 ist. Diese Drehbewegung wird über einen elektrischen, pneumatischen, hydraulischen oder anderen Antrieb 9 bewerkstelligt. Die Bewegung des Aufnahmeelementes 4, welche allenfalls auch eine Bewegung um einen ausserhalb des Aufnahmeelementes 4 liegenden Drehpunkt sein könnte, erfolgt in einer im Wesentlichen ortsfesten Ebene, vorzugsweise parallel zu der durch die Öffnungen der Sacklöcher 7 definierten Ebene.

Einige oder alle der Sacklöcher 7 können verschliessbar sein, insbesondere um die Verarbeitung von Kabeln 3 zu erleichtern, bei der die Anzahl der auszurichtenden Leitungsenden 2 geringer ist als die Anzahl der überhaupt vorhandenen Sacklöcher 7. Um eine erfindungsgemässe Ausrichtvorrichtung flexibel für die Verarbeitung verschiedener Kabeltypen auszugestalten, insbesondere auch in Bezug auf den Querschnitt der Leitungsenden 2, kann gegebenenfalls der Querschnitt zumindest einiger der Sacklöcher 7 zumindest über eine Teil ihrer Tiefe einstellbar sein. Typischerweise ist aber die Ausrichtvorrichtung auf einen bestimmten Kabeltyp abgestimmt, so dass eine Adaptierung, Verstellung oder auch ein prinzipiell möglicher Austausch des Aufnahmeelementes 4 nicht notwendig ist.

Für die Steuerung der Abläufe bei der Ausrichtung und dem Spannungsabbau in den Leitungsenden 2 sind in jedem Fall die Klemmvorrichtung 5 und das Aufnahmeelement 4 mit einer Steuerung (nicht dargestellt) verbunden. In dieser Steuerung ist, fest verdrahtet, über gedruckte Schaltungen oder durch Software realisiert, ein Ablauf implementiert, gemäss welchem die Ausführung der folgenden Schritte bewirkt wird: Nachfolgend an das Annähern des Aufnahmeelementes 4 an die Klemmvorrichtung 5 - mit Einschieben der Leitungsenden 2 in die Sacklöcher 7 des Aufnahmeelementes 4 - wird dieses derart in Drehung versetzt. Dabei wird das Aufnahmeelement 4 aus einer Ausgangsstellung zumindest je einmal um je einen vordefinierten Winkel in jede der beiden Umfangsrichtungen verdreht (siehe dazu Fig. 5).

Nachfolgend soll das Verfahren zum Formen von Leitungsenden 2, insbesondere zum genauen und parallelen Ausrichten mit gleichzeitiger Auflösung aller Spannungen in den Leitungsenden 2, erläutert werden, das vom Aufspreizen und Ausrichten der Litzen des Kabels 3 ausgeht.

Die Leitungsenden 2 werden aus einer in Fig. 3 dargestellten Anfangsposition durch die relative Bewegung zueinander von Aufnahmeelement 4 und Klemmvorrichtung 5 mit darin fixiertem Kabel 3 zuerst in den Bereich der Führungen 6 des Aufnahmeelementes 4 gebracht. Bei Fortsetzung der Relativbewegung von Aufnahmeelement 4 und Klemmvorrichtung 5 werden die Leitungsenden 2, geführt von den Führungen 6, weiter in die vorzugsweise parallelen Sacklöcher 7 eingeschoben, wie in Fig. 4 gezeigt ist. Dort werden sie spannungsfrei positioniert, insbesondere nicht geklemmt oder auch sonst nicht aktiv mit Kräften beaufschlagt, die zu Spannungen in den Leitungsenden 2 führen können.

In dieser Position der Leitungsenden 2 in den Sacklöchern 7 wird das Aufnahmeelement 4 in einer Ebene senkrecht auf die Achsen der Leitungsenden 2 in Bewegung gesetzt, vorzugsweise um eine erste zwischen den Leitungsenden 2 liegende Achse in Drehung versetzt. Dazu wird das Aufnahmeelement 4 um eine zweite Achse, vorzugsweise die gemeinsame Achse der Sacklöcher 7 zur Aufnahme der Leitungsenden 2, gedreht. Beide Achsen fallen in der dargestellten Ausführungsform der erfindungsgemässsen Vorrichtung mit der Längsachse A des in der Klemmvorrichtung 5 fixierten Kabels 3 zusammen. Typischerweise wird die Anordnung der Leitungsenden 2 damit um eine im Wesentlichen gemeinsame und zentral zwischen den Leitungsenden 2 liegende Achse zumindest einmal gedreht. Vorzugsweise, und in Fig. 5 auch durch die Pfeile angedeutet, wird die Anordnung der Leitungsenden 2 aus einer Ausgangsstellung zumindest einmal in die beiden entgegengesetzten Richtungen gedreht. Durch die rotierende bzw. oszillierende Bewegung zum Beispiel um die Längsachse des Kabels 3 nach rechts und links aus der Startstellung um einen bestimmten jedoch variablen Winkel und mit einer bestimmten jedoch variablen Zyklenzahl werden die Leitungsenden 2 von Ihren Spannungen befreit.

Der Winkel W der Drehung D wird vorzugsweise derart gewählt, dass alle Spannungen aus den Leitungsenden 2 gelöst werden, die Leitungsenden 2 aber nicht in den Sacklöchern 7 oder an den Rändern von deren Öffnungen beschädigt werden. Der Winkel W der Drehung wird dabei kleiner als 90° sein, vorzugsweise kleiner als 45°, bevorzugt bei ca. 30° betragen. Besonders gute Ergebnisse für die Lösung von Spannungen wurden bei mehrmaliger Drehung D in jede Richtung erzielt. Besonders günstig sind dabei jeweils zwei bis zehn Drehungen in jede Umfangsrichtung. Im Rahmen von Erprobungen an Prototypen wurden sehr gute Ergebnisse mit einem Winkel W von ca. 30° und einer 8maligen Hin- und Her-Bewegung erzielt.

Der Winkel W der Drehung kann auch bei jeder Drehung variieren. So sind beispielsweise Verfahrensabläufe möglich, bei welchen der Winkel W von der ersten bis zur letzten Drehung hin abnimmt (beispielsweise die erste Drehung um einen Winkel von ca. 30° erfolgt, die zweite Drehung um einen kleineren Winkel von ca. 20", gefolgt von einer oder mehreren letzten Drehungen um nur noch ca. 10°) oder auch zunimmt. Derartige Abläufe sind besonders einfach mit einem Elektroantrieb des Aufnahmeelementes 4 realisierbar.

Meist werden die Ausrichtvorrichtungen für bestimmte Kabeltypen aufgebaut und bleiben dann im Wesentlichen unverändert. Andererseits könnte die Ausrichtvorrichtung auch flexibel auf unterschiedliche Arten und Typen von Kabeln einstellbar sein. Dann umfasst das erfindungsgemässe Verfahren auch die Rüst- bzw. Adaptierungsphase an das jeweils zur Verarbeitung gelangende Kabel.

Dies kann beispielsweise durch das Anpassen der Anzahl und/oder der Dimensionen der Sacklöcher 7 erfolgen, damit deren Anzahl an die Anzahl der Leitungsenden 2 und deren Länge zumindest der freien Länge der Leitungsenden 2 entspricht. Auch muss in jeder Tiefe der Sacklöcher 7 deren kleinster Durchmesser grösser sein als der grösste Durchmesser der Leitungsenden 2 an einem beliebigen Längsabschnitt dieser Leitungsenden 2.

Diese Anpassung kann entweder durch Einbau bzw. Anschliessen eines Aufnahmeelementes 4 erfolgen, das die entsprechende Anzahl und die entsprechenden Dimensionen der Sacklöcher 7 aufweist. Die Anpassung kann alternativ aber auch durch Anpassung der Anzahl und/oder der Dimensionen der Sacklöcher 7 durch manuelles oder automatisches Öffnen oder Verschliessen der Sacklöcher 7 im Aufnahmeelement 4 erfolgen. Eine weitere alternative Massnahme wäre beispielsweise eine Anpassung des Querschnitts der Sacklöcher 7 im Aufnahmeelement 4. In letzterem Fall kann diese Anpassung durch vorhergehende, vorzugsweise automatische Identifizierung des Kabeltyps durch geeignete Sensorik in der Steuereinrichtung erfolgen.

### Bezugszeichenliste

- 1: Ausrichtvorrichtung
- 2: Leitungsenden
- 3: Kabel
- 4: Aufnahmeelement
- 5: Klemmvorrichtung für Kabel
- 6: Führung
- 7: Sackloch
- 8: Antrieb translatorisch für Aufnahmeelement
- 9: Antrieb rotativ für Aufnahmeelement
- A: Längsachse des Kabels
- D: Drehrichtung
- W: Winkelbereich der Drehung

## Patentansprüche

1. Ausrichtvorrichtung für zumindest zwei einzelne Leitungsenden (2) eines Kabels (3), mit einer Klemmvorrichtung (5) für das Kabel (3) und einem Aufnahmeelement (4) mit Ausnehmungen (6, 7) für die zumindest zwei freigelegten Leitungsenden (2), wobei das Aufnahmeelement (4) und die Klemmvorrichtung (5) relativ zueinander und koaxial zur Längsachse des eingespannten Kabels (3) verschiebbar gelagert sind, **dadurch gekennzeichnet, dass** die Ausnehmungen (6, 7) des Aufnahmeelementes (4) trichterförmige Führungen (6) für die Leitungsenden (2) aufweisen, an welche Führungen (6) sich jeweils ein längliches Sackloch (7) anschliesst, und wobei jedenfalls das Aufnahmeelement (4) gegenüber der Klemmvorrichtung (5) für das Kabel (3) koaxial zur Längsachse des eingespannten Kabels (3) drehbar gelagert ist.

2. Ausrichtvorrichtung nach Anspruch 1, **dadurch gekennzeichnet, dass** das Aufnahmeelement (4) In einer Ebene senkrecht auf die Richtung des eingespannten Kabels (3) schwenkbar ist.

3. Ausrichtvorrichtung nach einem der Ansprüche 1 oder 2, **dadurch gekennzeichnet, dass** das Aufnahmeelement (4) relativ zu einer ortsfesten Klemmvorrichtung (5) verschiebbar gelagert ist, vorzugsweise koaxial zur Längsachse des eingespannten Kabels (3).

4. Ausrichtvorrichtung nach zumindest einem der Ansprüche 1 bis 3, **dadurch gekennzeichnet, dass** die Sacklöcher (7) in einer vordefinierten geometrischen Anordnung, vorzugsweise gleichvertellt entlang eines Kreises um den Schnittpunkt der Längsachse des eingespannten Kabels (3) mit der ortsfesten Ebene der Bewegung des Aufnahmeelementes (4), vorgesehen sind.

5. Ausrichtvorrichtung nach zumindest einem der Ansprüche 1 bis 4, **dadurch gekennzeichnet, dass** die Sacklöcher (7) in einer vorgegebenen Orientierung zueinander angeordnet sind, vorzugsweise parallel zueinander liegen.

6. Ausrichtvorrichtung nach zumindest einem der Ansprüche 1 bis 5, **dadurch gekennzeichnet, dass** die Länge der Sacklöcher (7) zumindest der freien Länge der Leitungsenden (2) entspricht und vorzugsweise in jeder Tiefe der Sacklöcher (7) deren kleinster Durchmesser grösser ist als der grösste Durchmesser der Leitungsenden (2) oder der Durchmesser des angebrachten Bauteils an einem beliebigen Längsabschnitt der Leitungsenden (2).

7. Ausrichtvorrichtung nach zumindest einem der Ansprüche 1 bis 6, **dadurch gekennzeichnet, dass** zumindest einige der Sacklöchern (7) verschliessbar sind und/oder der Querschnitt zumindest einiger der Sacklöcher (7) zumindest über einen Teil ihrer Tiefe einstellbar ist.

8. Ausrichtvorrichtung nach zumindest einem der Ansprüche 1 bis 7, **dadurch gekennzeichnet, dass** die Klemmvorrichtung (5) und das Aufnahmeelement (4) mit einer Steuerung verbunden sind, in welcher ein Ablauf implementiert ist, gemäss welchem nachfolgend an das Annähern von Aufnahmeelement (4) und Klemmvorrichtung (5) mit Einschieben der Leitungsenden (2) in die Sacklöcher (7) das Aufnahmeelement (4) derart in Drehung versetzt wird, dass es aus der Ausgangsstellung zumindest je einmal um je einen vordefinierten Winkel in jede Umfangsrichtung verdreht wird.

9. Verfahren zum Formen von Leitungsenden eines Kabels mit zumindest zwei Leitungsenden, umfassend das Aufspreizen und Ausrichten der Leitungsenden (2) des Kabels (3), **gekennzeichnet durch** das Einschieben und spannungsfreie Positionieren je eines Leitungsendes (2) in jeweils eines einer Anzahl von zumindest zwei vorzugsweise parallel verlaufenden Sacklöchern (7) und **durch** das anschliessende zumindest einmalige gemeinsame Bewegen der Leitungsenden (2) um eine gemeinsame erste Achse **durch** Bewegen der Sacklöcher (7) um eine gemeinsame zweite Achse der Sacklöcher (7).

10. Verfahren nach Anspruch 9, **dadurch gekennzeichnet, dass** die Anordnung der Leitungsenden (2) um die erste Achse zumindest einmal gedreht wird, welche erste Achse durch den zentralen Bereich zwischen den Leitungsenden (2) verläuft.

11. Verfahren nach Anspruch 9 oder 10, **dadurch gekennzeichnet, dass** die Anordnung der Leitungsenden (2) zumindest einmal aus der Ausgangsstellung um je einen vordefinierten Winkel (W) in jede der beiden Umfangsrichtungen (D) verdreht wird.

12. Verfahren nach zumindest einem der Ansprüche 9 bis 11, **gekennzeichnet durch** das Anpassen der Anzahl und/oder der Dimensionen der Sacklöcher (7) derart, dass die Anzah der Sacklöcher (7) der Anzahl der Leitungsenden (2) und die Länge der Sacklöcher (7) zumindest der freien Länge der Leitungsenden (2) entspricht und vorzugsweise In jeder Tiefe der Sacklöcher (7) deren kleinster Durchmesser grösser ist als der grösste Durchmesser der Leitungsenden (2) oder der Durchmesser des angebrachten Bauteils an einem beliebigen Längsabschnitt der Leitungsenden (2).

13. Verfahren nach Anspruch 12, **dadurch gekennzeichnet, dass** die Anpassung der Anzahl und/oder der Dimensionen der Sacklöcher (7) durch Auswahl und Rüsten der Ausrichtvorrichtung mit einem die gewünschte Anzahl und die gewünschten Dimensionen der Sacklöcher aufweisenden Aufnahmeelement (4) umfasst.

14. Verfahren nach Anspruch 13, **dadurch gekennzeichnet, dass** die Anpassung der Anzahl und/oder der Dimensionen der Sacklöcher (7) durch Öffnen oder Verschliessen bzw. durch Anpassung des Querschnitts der Sacklöcher (7) im Aufnahmeelement (4) umfasst.

## Claims

1. An aligning device for at least two individual wire ends (2) of a cable (3), with a clamping device (5) for the cable (3) and with a receiving element (4) with recesses (6, 7) for the at least two exposed wire ends (2), wherein the receiving element (4) and the clamping device (5) are mounted such that they are displaceable relative to one another and coaxial to the longitudinal axis of the clamped cable (3), **characterized in that** the recesses (6, 7) of the receiving element (4) feature funnel-shaped guides (6) for the wire ends (2) and an elongate blind hole (7) is respectively arranged behind said guides (6), wherein at least the receiving element (4) is mounted such that it is rotatable relative to the clamping device (5) for the cable (3) coaxial to the longitudinal axis of the clamped cable (3).

2. The aligning device according to claim 1, **characterized in that** the receiving element (4) is pivotable in a plane extending perpendicular to the direction of the clamped cable (3).

3. The aligning device according to one of claims 1 or 2, **characterized in that** the receiving element (4) is mounted displaceably relative to a stationary clamping device (5), preferably coaxial to the longitudinal axis of the clamped cable (3).

4. The aligning device according to at least one of claims 1 to 3, **characterized in that** the blind holes (7) are provided in a predefined geometric arrangement, preferably in uniform distribution along a circle around the intersecting point between the longitudinal axis of the clamped cable (3) and the stationary plane of motion of the receiving element (4).

5. The aligning device according to at least one of claims 1 to 4, **characterized in that** the blind holes (7) are arranged with a predefined orientation relative to one another, preferably parallel to one another.

6. The aligning device according to at least one of claims 1 to 5, **characterized in that** the length of the blind holes (7) corresponds at least to the exposed length of the wire ends (2) and the smallest diameter of the blind holes (7) preferably is at any depth thereof greater than the largest diameter of the wire ends (2) or the diameter of the component attached to an arbitrary longitudinal section of the wire ends (2).

7. The aligning device according to at least one of claims 1 to 6, **characterized in that** at least a few of the blind holes (7) can be closed and/or the cross section of at least a few of the blind holes (7) is adjustable over at least part of their depth.

8. The aligning device according to at least one of claims 1 to 7, **characterized in that** the clamping device (5) and the receiving element (4) are connected to a control, in which a sequence is implemented, according to which the receiving element (4) is set in rotation subsequent to the approach of the receiving element (4) and the clamping device (5), as well as the associated insertion of the wire ends (2) into the blind holes (7), such that it is respectively rotated at least once in each circumferential direction from the starting position by a respectively predefined angle.

9. A method for shaping wire ends of a cable with at least two wire ends, in which the wire ends (2) of the cable (3) are spread apart and aligned, **characterized by** the insertion and stress-free positioning of a respective wire end (2) in one of at least two blind holes (7) that preferably extend parallel to one another, and by subsequently moving the wire ends (2) jointly about a common first axis at least once by moving the blind holes (7) about a common second axis of the blind holes (7).

10. The method according to claim 9, **characterized in that** the arrangement of the wire ends (2) is rotated about the first axis at least once, wherein said first axis extends through the central region between the wire ends (2).

11. The method according to claim 9 or 10, **characterized in that** the arrangement of the wire ends (2) is rotated at least once in each of the two circumferential directions (D) from the starting position by a predefined angle (W).

12. The method according to at least one of claims 9-11, **characterized by** adapting the number and/or the dimensions of the blind holes (7) in such a way that the number of blind holes (7) corresponds to the number of wire ends (2), the length of the blind holes (7) corresponds at least to the exposed length of the wire ends (2) and the smallest diameter of the blind holes (7) preferably is at any depth thereof greater than the largest diameter of the wire ends (2) or the diameter of the component attached to an arbitrary longitudinal section of the wire ends (2).

13. The method according to claim 12, **characterized in that** the number and/or the dimensions of the blind holes (7) are adapted by selecting and setting up the aligning device with a receiving element (4) that features the desired number of blind holes with the desired dimensions.

14. The method according to claim 13, **characterized in that** the number and/or the dimensions of the blind holes (7) are adapted by opening or closing and by adapting the cross section of the blind holes (7) in the receiving element (4).

## Revendications

1. Dispositif d'alignement pour au moins deux extrémités de ligne (2) d'un câble (3), comprenant un dispositif de serrage (5) pour le câble (3) et un élément de réception (4) avec des évidements (6, 7) pour les au moins deux extrémités de ligne (2) dénudées, dans lequel l'élément de réception (4) et le dispositif de serrage (5) sont disposés de façon à pouvoir coulisser l'un par rapport à l'autre et coaxialement à l'axe longitudinal du câble (3) serré, **caractérisé en ce que** les évidements (6, 7) de l'élément de réception (4) comportent des guides en forme d'entonnoirs (6) pour les extrémités de ligne (2), un trou borgne (7) étant respectivement disposé à la suite des guides (6), et dans lequel au moins l'élément de réception (4) est monté de façon rotative par rapport au dispositif de serrage (5) pour le câble (3), coaxialement à l'axe longitudinal du câble (3) serré.

2. Dispositif d'alignement selon la revendication 1, **caractérisé en ce que** l'élément de réception (4) peut pivoter dans un plan perpendiculairement en direction du câble (3) serré.

3. Dispositif d'alignement selon l'une des revendications 1 ou 2, **caractérisé en ce que** l'élément de réception (4) est monté de façon à pouvoir coulisser par rapport à un dispositif de serrage (5) immobile, de préférence coaxialement à l'axe longitudinal du câble (3) serré.

4. Dispositif d'alignement selon au moins l'une des revendications 1 à 3, **caractérisé en ce que** les trous borgnes (7) sont disposés selon un agencement géométrique prédéfini, en étant de préférence répartis de façon régulière le long d'un cercle autour du point d'intersection de l'axe longitudinal du câble (3) serré et du plan immobile du mouvement de l'élément de réception (4).

5. Dispositif d'alignement selon au moins l'une des revendications 1 à 4, **caractérisé en ce que** les trous borgnes (7) sont disposés selon une orientation prédéfinie l'un par rapport à l'autre et s'étendent de préférence parallèlement l'un à l'autre.

6. Dispositif d'alignement selon au moins l'une des revendications 1 à 5, **caractérisé en ce que** la longueur des trous borgnes (7) correspond au moins à la longueur libre des extrémités de ligne (2), et le plus petit diamètre dans la profondeur de chaque trou borgne (7) étant de préférence supérieur au plus grand diamètre des extrémités de ligne (2) ou au diamètre de la pièce fixée, sur une section longitudinale au choix des extrémités de ligne (2).

7. Dispositif d'alignement selon au moins l'une des revendications 1 à 6, **caractérisé en ce qu'**au moins quelques-uns des trous borgnes (7) peuvent être fermés et/ou **en ce que** la section transversale de quelques-uns au moins des trous borgnes (7) peut être réglée sur au moins une partie de sa profondeur.

8. Dispositif d'alignement selon au moins l'une des revendications 1 à 7, **caractérisé en ce que** le dispositif de serrage (5) et l'élément de réception (4) sont reliés à une commande dans laquelle est exécuté un programme selon lequel, suite au rapprochement de l'élément de réception (4) et du dispositif de serrage (5) avec insertion des extrémités de ligne (2) dans les trous borgnes (7), l'élément de réception (4) est mis en rotation de façon à tourner au moins une fois respectivement autour d'un angle prédéfini dans chaque direction circonférentielle à partir de la position initiale.

9. Procédé selon pour la formation d'extrémités de ligne d'un câble avec au moins deux extrémités de ligne, comprenant l'écartement et l'orientation des extrémités de ligne (2) du câble (3), **caractérisé par** l'insertion et le positionnement sans tension d'une extrémité de ligne (2) respective dans l'un parmi une pluralité d'au moins deux trous borgnes (7) s'étendant de préférence parallèlement, et par au moins un déplacement consécutif conjoint des extrémités de ligne (2) autour d'un premier axe conjoint, par déplacement des trous borgnes (7) autour d'un deuxième axe conjoint des trous borgnes (7).

10. Procédé selon la revendication 9, **caractérisé en ce que** l'agencement des extrémités de ligne (2) autour du premier axe est tourné au moins une fois, ledit premier axe s'étendant à travers la région centrale entre les extrémités de ligne (2).

11. Procédé selon la revendication 9 ou 10, **caractérisé en ce que** l'agencement des extrémités de ligne (2) est tourné au moins une fois à partir de la position initiale, respectivement autour d'un angle prédéfini (W) dans chacune des deux directions circonférentielles (D).

12. Procédé selon au moins l'une des revendications 9 à 11, **caractérisé par** l'adaptation du nombre et/ou des dimensions des trous borgnes (7) de manière à ce que le nombre de trous borgnes (7) corresponde au nombre d'extrémités de ligne (2) et à ce que la longueur des trous borgnes (7) corresponde au moins à la longueur libre des extrémités de ligne (2), et de préférence à ce que le plus petit diamètre dans la profondeur de chaque trou borgne (7) soit supérieur au plus grand diamètre des extrémités de ligne (2) ou au diamètre de la pièce fixée, sur une section longitudinale au choix des extrémités de ligne (2).

13. Procédé selon la revendication 12, **caractérisé en ce que** l'adaptation du nombre et/ou des dimensions des trous borgnes (7) comprend la sélection et l'équipement du dispositif d'alignement avec un élément de réception (4) présentant le nombre et les dimensions de trous borgnes souhaités.

14. Procédé selon la revendication 13, **caractérisé en ce que** l'adaptation du nombre et/ou des dimensions des trous borgnes (7) comprend l'ouverture ou la fermeture des trous borgnes (7) ou l'adaptation de la section transversale de ceux-ci dans l'élément de réception (4).
